# EUROPÄISCHE PATENTSCHRIFT

(11) **EP 3 789 127 B1**
(45) Veröffentlichungstag und Bekanntmachung des Hinweises auf die Patenterteilung: **11.01.2023**
(21) Anmeldenummer: 20194233.1
(22) Anmeldetag: 03.09.2020
(51) Int. Cl.: B07C 1/04

(54) **PACKSTÜCKSAMMELVORRICHTUNG**
DEVICE FOR COLLECTING PACKAGES
DISPOSITIF DE COLLECTE DES COLIS

(30) Priorität: 05.09.2019 DE 102019123805
(43) Veröffentlichungstag der Anmeldung: 10.03.2021
(73) Patentinhaber: Deutsche Post AG, 53113 Bonn (DE)
(72) Erfinder: Hartmann, Bernd, 53501 Grafschaft-Leimersdorf (DE)
(74) Vertreter: Michalski Hüttermann & Partner Patentanwälte mbB

(56) Entgegenhaltungen:
- WO-A1-2004/050518
- DE-A1-102010 033 115
- DE-A1-102012 003 439

## Beschreibung

### Technisches Gebiet

Die Erfindung betrifft eine Packstücksammelvorrichtung für eine Packstückhandhabungsanlage zum Entladen einer Mehrzahl an Packstücken von einem Transportzuführmittel der Packstückhandhabungsanlage und Verbringen von entladenen Packstücken zu einem Transportabführmittel der Packstückhandhabungsanlage. Sie betrifft außerdem eine Packstückhandhabungsanlage umfassend eine solche Packstücksammelvorrichtung.

### Hintergrund der Erfindung

Mechanisierte und automatisierte Entladevorrichtungen sind aus dem Stand der Technik bekannt. Außerdem sind Packstücksammeleinrichtungen aus dem Stand der Technik bekannt, die fest in derartige Entladevorrichtungen integriert sind und bei einer Einführung einer neuen Technologie von einem Anwender meist hohe Investitionen erfordern. Außerdem erfordern sie in der Regel spezielle Steuerungstechniken und sind in sich geschlossene Lösungen.

Aus der DE 698 15 649 T2 ist ein Verfahren und eine Ausrüstung zum automatischen Sortieren von Gegenständen bekannt. Die Ausrüstung umfasst eine Mehrzahl an Fördermittelplattformen, die entlang einer Route zwischen einer Ladezone, in der die Gegenstände auf die Plattform aufgebracht werden, und einer Entladezone, in der die Gegenstände von den Plattformen in eine oder mehrere Sammeleinrichtungen, die seitlich relativ zu der Route angeordnet sind, entladen werden, beweglich sind, wobei jede Fördermittelplattform zwei Zonen definiert, wobei jede der beiden Zonen so gestaltet ist, um einen Gegenstand zu empfangen, wobei die Ausrüstung Mittel zu Modifizierung einer Ladereihenfolge der Gegenstände in der Ausrüstung einschließt, so dass der erst zu entladende Gegenstand nach dem Laden in einer Zone der Fördermittelplattform angeordnet ist, die sich auf der Entladeseite, auf der eine ersten Sammeleinrichtung zum Empfang der Gegenstände ist, befindet.

Aus der DE 602 07 887 T2 ist ein zusammenlegbarer und verkleinerbarer tragbarer Klapptisch zur Unterbringung in Wohnmobilen, Flugzeugen und kleinen Unterbringungen im zusammengelegten Zustand bekannt.

Die DE 10 2010 033 115 A1 beschreibt einen Entlademanipulator und ein Verfahren zum automatisierten Entladen von Stückgütern aus Containern und Laderäumen von Fahrzeugen, in denen die Stückgüter zum Transport platzsparend nebeneinander und/oder übereinander gestapelt sind, wobei das freie Ende der Entlademanipulator bis zu dem Stückgutstapel in den Container oder Laderaum hinein teleskopierbar ist.

Die WO 2004 050 518 A1 beschreibt eine Teleskopfördereinrichtung, die an an ihrem vorderen Ende einen Fahrkopf aufweist, der eine eigene Antriebseinrichtung aufweist. Dieser dient sowohl dazu, das Teleskop ein- und auszufahren als auch dazu, optional angeschlossene Zusatzgeräte, wie Handlingroboter, Entladebänder oder dergleichen zu verfahren.

Die DE 10 2012 003 439 A1 beschreibt eine Vorrichtung zum Entladen von Stückgut, mit einem Aufnahmeförderer, der ein frei vorstehendes Aufnahmeende und ein hinteres Abgabeende aufweist, einem Abförderer und einem dazwischen angeordneten Übergabeförderer, der ein vorderes, an das Abgabeende des Aufnahmeförderers anschließendes Übernahmeende und ein hinteres, an ein Kopfende des Abförderers anschließendes Übergabeende aufweist, wobei der Übergabeförderer um eine an dem Übergabeende angeordnete erste Schwenkachse höhenverschwenkbar gehalten ist, und der Aufnahmeförderer um eine an dem Abgabeende angeordnete zweite Schwenkachse höhenverstellbar gehalten ist, wobei der Aufnahmeförderer und der Übergabeförderer durch Schwenken um die erste und zweite Schwenkachse in mindestens eine obere Entladestellung, in der sich der Übergabeförderer im Wesentlichen waagerecht vor der ersten Schwenkachse, der Aufnahmeförderer im Wesentlichen senkrecht unter der zweiten Schwenkachse und das Aufnahmeende des Aufnahmeförderers auf dem Boden des Laderaums befinden, oder in mindestens eine untere Entladestellung, in der sich der Aufnahmeförderer und der Übergabeförderer unter einen Winkel von höchstens 10°, 20°, 30°, oder 40° zur Horizontalen und das Aufnahmeende des Aufnahmeförderers auf dem Boden des Laderaums befinden, bringbar sind.

### Beschreibung der Erfindung

Ausgehend von dieser Situation ist es eine Aufgabe der vorliegenden Erfindung, eine flexible, kostengünstige und einfach handhabbare Packstücksammelvorrichtung für Packstückhandhabungsanlagen zur Verfügung zu stellen, die insbesondere an unterschiedliche Peripheriegeräte anpassbar / adaptierbar ist, ohne aufwendige Steuerungstechnik funktioniert und einen hohen Sicherheitsstandart für Bedienpersonal besitzt.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch eine Packstücksammelvorrichtung für eine Packstückhandhabungsanlage zum Entladen einer Mehrzahl an Packstücken von einem Transportzuführmittel der Packstückhandhabungsanlage und Verbringen von entladenen Packstücken zu einem Transportabführmittel der Packstückhandhabungsanlage, wobei die Packstücksammelvorrichtung ein Sammelelement, das eine Auflagefläche für wenigstens ein Packstück während der Verbringung vom Transportzuführmittel zum Transportabführmittel aufweist, und zumindest ein daran angeordnetes zwischen einer Ruheposition und einer Arbeitsposition verbringbares Seitenelement mit einer weiteren Auflagefläche für wenigstens ein Packstück umfasst, wobei die Auflagefläche des Seitenelements bei in der Arbeitsposition befindlichem Seitenelement bündig an die Auflagefläche des Sammelelements anschließt. Dabei ist vorgesehen, dass die Packstücksammelvorrichtung außerdem eine Koppeleinrichtung zur mechanischen lösbaren Kopplung mit dem Transportabführmittel umfasst, wobei die Koppeleinrichtung zum Positionieren der Packstücksammelvorrichtung in einer im Wesentlichen horizontalen Richtung ausgebildet ist und mit einer in horizontaler Richtung wirkenden Überlasteinrichtung versehen ist, die unterhalb einer vorzugsweise einstellbaren Grenzlast eine feste Kopplung der Packstücksammelvorrichtung mit dem Transportabführmittel bewirkt und bei Erreichen der Grenzlast in horizontaler Richtung ein automatisches Entkoppeln der Packstücksammelvorrichtung von dem Transportabführmittel bewirkt.

Die Aufgabe wird außerdem gelöst durch eine Packstückhandhabungsanlage umfassend eine erfindungsgemäße Packstücksammelvorrichtung, nach einem oder mehreren der angehängten Ansprüche.

Ein wesentlicher Punkt der Erfindung ist die Schnittstelle der Packstücksammelvorrichtung zum Transportabführmittel, das vorzugsweise als Teleskopbandförderer ausgebildet ist. Die Schnittstelle ist erfindungsgemäß in Form einer Koppeleinrichtung ausgebildet, die eine Kopplung der Packstücksammelvorrichtung ähnlich einem Bohrer an eine Bohrmaschine an das Transportabführmittel bewirkt. Die Packstücksammelvorrichtung besteht in einer Basisausführungsform im Wesentlichen aus zwei Elementen, dem Sammelelement und dem daran seitlich angeordneten Seitenelement. In einer bevorzugten Ausführungsform besteht die erfindungsgemäße Vorrichtung im Wesentlichen aus drei Elementen oder Einheiten, nämlich dem Sammelelement und zwei vorzugsweise spiegelsymmetrisch ausgebildeten Seitenelementen. Diese beiden Seitenelemente sind seitlich, links und rechts, an dem daher zentralen Sammelelement angeordnet, beispielsweise montiert. Das zentrale Sammelelement enthält die Koppeleinrichtung zur Kopplung mit dem Transportabführmittel, insbesondere in Form des Teleskopbandförderers. Die Arbeitshöhe der Packstücksammelvorrichtung ist vorzugsweise einstellbar, insbesondere individuell einstellbar.

Die erfindungsgemäße Packstücksammelvorrichtung bildet in vorteilhafter Weise eine einfache, robuste und optional rein mechanische Vorrichtung, die an eine Vielzahl unterschiedlicher Transportabführmittel koppelbar ist und daher eine große Flexibilität hinsichtlich einer Umrüstung oder Nachrüstung bestehender Packstückhandhabungsanlagen bietet. Die erfindungsgemäße Packstücksammelvorrichtung kann in vorteilhafter Weise ohne Steuerungseinrichtung betrieben werden, was sie besonders geeignet für eine Implementierung in unterschiedliche Anlagen und deren Steuerungskonzepte macht. Anders ausgedrückt müssen bestehende Komplettanlagen bei einer Implementierung der erfindungsgemäßen Packstücksammelvorrichtung nicht hinsichtlich ihrer Steuerung adaptiert oder geändert werden, was einen hohen Kostenvorteil beinhaltet.

Das Sammelelement kann insbesondere tischartig ausgebildet sein. Es weist die Auflagefläche für die Packstücke auf, die wiederum auf einer Unterstruktur / Tragkonstruktion / Fundament insbesondere in Form von Beinen aufliegt und getragen ist. Die Auflagefläche kann insbesondere durch eine Platte oder Ähnliches ausgebildet sein und weist vorzugsweise eine Oberflächenstruktur auf, die ein Gleiten der Packstücke darüber ermöglicht und erleichtert. Optional kann die Auflagefläche ein Fördermittel aufweisen oder durch ein Fördermittel ausgebildet sein, zum Beispiel durch ein Förderband oder Ähnliches. Die Ablagefläche des Sammelelements kann insbesondere zum Transportabführmittel hin geneigt ist, so dass Packstücke vom Sammelelement auf das Transportabführmittel rutschen können. Das Sammelelement steht vorzugsweise auf Rollen, die sich beim Aufstellen absenken und so einen festen und sicheren Stand gewährleisten können.

Das Seitenelement ist vorzugsweise tischartig oder als Tisch ausgebildet oder weist einen Tisch auf und bildet neben der Auflagefläche des Sammelelements eine weitere Auflagefläche für die Packstücke aus. Der Tisch bzw. die Auflagefläche des Seitenelements ist vorzugsweise derart steif ausgebildet, dass eine Bedienperson zu einem Packstück hinlangen und ein oder mehrere Packstücke fassen kann. Die Positionierung des Seitenelements zwischen der Ruheposition und der Arbeitspositionen kann durch einfahren/ausfahren und/oder einklappen/ausklappen erfolgen.

Nach einer besonders vorteilhaften Ausführungsform umfasst die Packmittelsammelvorrichtung genau zwei zwischen einer Ruheposition und einer Arbeitsposition verbringbare Seitenelemente, die auf einander gegenüberliegenden Seiten des Sammelelements angeordnet sind. Das Sammelelement ist damit zentral zwischen den beiden gegenüberliegenden Seitenelementen angeordnet und kann als zentrales Sammelelement bezeichnet werden. Vorzugsweise sind die beiden Seitenelemente zueinander spiegelsymmetrisch ausgebildet und angeordnet.

Es ist von besonderem Vorteil, wenn nach einer weiteren Ausführungsform der Erfindung die Koppeleinrichtung zum Anheben und Absenken der Packstücksammelvorrichtung eingerichtet ist. Das kann einerseits bedeuten, dass die Koppeleinrichtung selbst das Anheben und Absenken bewirkt oder andererseits, dass die Koppelrichtung ausgebildet ist, um ein durch eine separate Betätigungseinrichtung bewirktes Angeben und Absenken auf die Packstücksammelvorrichtung zu übertragen.

Die Koppeleinrichtung zum Positionieren der Packstücksammelvorrichtung ist in einer im Wesentlichen horizontalen Richtung ausgebildet. Die Koppeleinrichtung ist vorzugsweise so ausgebildet, dass das Transportabführmittel, insbesondere in Form eines Teleskopbandförderers, die Packstücksammelvorrichtung relativ zum Transportzuführmittel vor- und/oder zurückführen / positionieren kann, um die Tiefe (in horizontaler Richtung) des Transportzuführmittels, das insbesondere zum Beispiel in Form eines Wechselbehälters ausgebildet sein kann, voll ausnutzen zu können. Sie ist außerdem mit einer in horizontaler Richtung wirkenden Überlasteinrichtung versehen. Die Überlasteinrichtung bewirkt unterhalb einer vorzugsweise einstellbaren Grenzlast eine feste Kopplung der Packstücksammelvorrichtung mit dem Transportabführmittel und bei Erreichen der Grenzlast in horizontaler Richtung ein automatisches Entkoppeln der Packstücksammelvorrichtung von dem Transportabführmittel. Auf diese Weise stellt die Überlasteinrichtung ein Sicherheitsfeature dar, mit dem zum Beispiel im Falle einer versehentlichen Fehlpositionierung der Packstücksammelvorrichtung relativ zur Transportzuführvorrichtung eine Verletzung vor Bedienpersonen vermieden werden kann. Eine besonders einfache und technisch elegante Lösung kann im Rahmen der Erfindung darin bestehen, dass die Koppeleinrichtung als Rutschkupplung ausgebildet ist. Die Koppelvorrichtung kann insbesondere mit dem Transportabführmittel exzentrisch ausgebildet sein.

Nach einer weiteren Ausführungsform ist die Auflagefläche des Seitenelements bei in der Arbeitsposition befindlichem Seitenelement in einer zum Sammelelement weisenden Richtung geneigt. Insbesondere kann die Auflagefläche jedes Seitenelements zum zentralen Sammelelement hin geneigt sein.

Alternativ oder zusätzlich kann die Auflagefläche des Seitenelements in einer Richtung quer zum Sammelelement geneigt sein, insbesondere trichterförmig ausgebildet sein. Damit ist das Seitenelement derart ausgebildet, dass die Packstücke in Richtung einer Bedienperson gleiten können, die sich in bestimmungsgemäßer Weise auf der dem Transportzuführmittel gegenüberliegenden Seite des Seitenelements befindet. Die Auflagefläche des Seitenelements kann insbesondere mit einer Senke ausgebildet sein, in die ein Packstück hineingleitet, ggf. auf der gegenüberliegenden Seite dann wieder hinaufgleiten und schließlich im Bereich der Senke im Wesentlichen lagebestimmt verbleibt.

Nach einer weiteren Ausführungsform ist das Seitenelement mit einer Ausziehvorrichtung versehen. Mittels einer solchen Ausziehvorrichtung ist die Auflagefläche des Seitenelements in vorteilhafter Weise vergrößerbar. Vorzugsweise ist die Ausziehvorrichtung ein gegenüber der Auflagefläche des Seitenelements relativpositionierbares Schubelement oder umfasst ein solches Schubelement. Das Schubelement bildet vorzugsweise eine im ausgezogenen Zustand mit der Auflagefläche des Seitenelements im Wesentlichen bündige und/oder ebene Fläche aus. Vorzugsweise ist die Ausziehvorrichtung auf der Seite der Bedienperson des Seitenelements angeordnet. Sie kann außerdem derart ausgebildet sein, dass sie durch den Druck großer Packstücke ausfährt und derart automatisch die Auflagefläche erweitert. In erster Näherung kann die Tiefe (in horizontaler Richtung) der Auflagefläche des Seitenelements von beispielsweise etwa 40cm auf etwa 60 cm vergrößert werden.

Eine weitere Ausführungsform der Erfindung weist das Seitenelement ein gegenüber dem Schubelement relativpositionierbares Schwenkelement auf. Diese kann insbesondere im ausgeschwenkten Zustand zusammen mit dem Schubelement und der Auflagefläche des Seitenelements eine im Wesentlichen bündige und/oder ebene Fläche ausbilden. Außerdem kann das Seitenelement eine unterhalb der Auflagefläche angeordnete Schublade aufweisen. Die Schublade kann ebenfalls ein Schwenkelement aufweisen, das dazu dient, eine zwischen der Schublade und dem Tisch befindliche Lücke bei Bedarf schließen zu können. Das Schwenkelement kann nach einer Ausführungsform insbesondere automatisch ein- und ausschwenken.

Eine Stabilisierung des Tischs gegenüber dem zentralen Sammelelement kann über eine unterhalb der Tischoberfläche angeordnete Stütze erfolgen. Nach einer weiteren Ausführungsform umfasst die Packstücksammelvorrichtung außerdem eine Klappstütze für das Seitenelement. Diese ist einerseits am Sammelelement angeordnet und richtet bei in der Arbeitsposition befindlichem Seitenelement dessen Auflagefläche bestimmungsgemäß aus und/oder fixiert diese. Bei in der Ruheposition befindlichem Seitenelement ist die Klappstütze vorzugsweise in einer Einhausung unterhalb der Auflagefläche des Sammelelements aufgenommen. Durch Ausbildung der Stütze in Form einer Klappstütze, die bei nicht im Gebrauch befindlichem Seitenelement in eine Einhausung verschwenkbar ist, besitzt die Vorrichtung in vorteilhafter Weise nur einen geringen Raumbedarf. Vorzugsweise besitzt die Klappstütze drei Standbeine, die mittels Verbindungsstäben miteinander verbunden sind. Bei eingeklapptem Seitenelement befinden sich sowohl die Standbeine als auch die Verbindungstäbe der Klappstütze innerhalb der Einhausung. Außerdem kann die Auflagefläche bei eingeklappten Seitenelement die Einhausung verschließen. Die Seitenelemente sind vorzugsweise dauerhaft mit dem Sammelelement bzw. dem zentralen Sammelelement verbunden, insbesondere über die Einhausung.

Das technologische Prinzip der Erfindung ist wie folgt: Eine Mehrzahl von Packstücken befindet sich in der Regel lose geladen in dem Transportzuführmittel, vorzugsweise in einem Wechselbehälter. Mit dem vorzugsweise als Teleskopbandförderer ausgebildeten Transportabführmittel wird die Packstücksammelvorrichtung bis an eine vordere (zur Packstücksammelvorrichtung weisende) Kante der lose in dem Wechselbehälter geladenen Packstücke gefahren / positioniert. Das Seitenelement ist zwischen einer Arbeitsposition und einer Ruheposition positionierbar. In der Arbeitsposition ist das Seitenelement einsatzbereit für eine Aufnahme von Packstücken. Das Seitenelement bzw. beide Seitenelemente befinden sich zunächst in der Arbeitsposition. Eine Bedienperson / ein Mitarbeiter zieht zumindest eines der Packstücke auf die Ablagefläche eines der Seitenelemente. Auf dieser rutschen die Packstücke auf das Sammelelement / das zentrale Sammelelement und von diesem auf das Transportabführmittel. Die Bildung einer Schüttung entsteht bereits bei kleinen Packstücken auf dem Seitenelement, spätestens mit der Zusammenführung auf dem Sammelelement / zentralen Sammelelement. Eine solche Schüttung von Packstücken wird auch als Bulk bezeichnet. Während des Entladens steht die Packstücksammelvorrichtung infolge einer entsprechenden bestimmungsgemäßen Relativpositionierung über die Koppelvorrichtung fest auf dem Transportzuführmittel / dem Wechselbehälter auf und ist mit dem Transportabführmittel mechanisch fest aber lösbar verbunden. Diese Verbindung ist vorzugsweise so ausgeführt, dass die Packstücksammelvorrichtung durch das Transportabführmittel im Wechselbehälter vor und zurück bewegt / positioniert werden kann. Kommt es während des Betriebs zu einer versehentlichen Fehlpositionierung der Packstücksammelvorrichtung relativ zum Wechselbehälter (also während die Vorrichtung fest auf dem Wechselbehälter steht), kann sich diese mechanische Verbindung lösen, was die Sicherheit für das Bedienpersonal in vorteilhafter Weise erhöht. Die Koppelvorrichtung ist zum Beispiel eine Rutschkupplung.

Ist der Bulk der Packstücke im Wechselbehälter bis zu Höhe des Tisches abgetragen, steht der Tisch im Weg, um die verbleibenden Packstücke auf den Teleskopbandförderer zu legen. In diesem Fall wird die ggf. vorhandene Schubvorrichtung einschoben. Dann wird das Seitenelement in die Ruheposition verbracht, zum Beispiel indem seine Auflagefläche angehoben, die Klappstütze eingeklappt und die Auflagefläche nach unten geklappt werden. Bei in der Ruheposition befindlichem Seitenelement ist der Weg für die Bedienperson frei, um verbleibende Packstücke auf das zentrale Sammelelement und/oder auf den Teleskopbandförderer zu legen.

Zusammenfassend kann man auch sagen, dass das zentrale Sammelelement dazu dient, die beiden Seitenelemente mit dem Transportabführmittel bzw. dem Teleskopbandförderer zu verbinden. Es verbindet außerdem die Packstücksammelvorrichtung mit dem Transportabführmittel bzw. dem Teleskopbandförderer derart mittels der lösbaren mechanischen Verbindung in Form der Koppelvorrichtung, dass sich die Verbindung bei versehentlichem Abziehen des Transportzuführmittels bzw. des Wechselbehälters löst und eine sich gegebenenfalls darin befindliche Bedienperson nicht mit der Packstücksammelvorrichtung aus dem Transportzuführmittel / dem Wechselbehälter geworfen wird.

Die Ablageflächen des Sammelelements und des Seitenelements bzw. der Seitenelemente und/der der Schubvorrichtung und/oder der Schwenkvorrichtung können nach einer Ausführungsform mit unterschiedler Rauigkeit, also unterschiedlich glatt, ausgebildet sein, zum Beispiel als Castor-Deck oder als Lochblech, etc.

Nach einer weiteren Ausführungsform kann die Packstückhandhabungsanlage eine automatische Handhabungseinrichtung, zum Beispiel in Form eines Mehrachsroboters, aufweisen, mittels der eine Bedienperson unterstützt oder ersetzt werden kann. In diesem Fall ist die Packstücksammelvorrichtung vorzugsweise außerdem mit einer Zustandserkennungseinrichtung für Packstücke im Materialfluss versehen, die zum Beispiel die relative Position der Packstücke zur Packstücksammelvorrichtung und optional den Betriebszustand der Packstücksammelvorrichtung erfasst. Aus diesen Daten wird mittels einer Rechnereinheit Steuerungsparameter für die Handhabungseinrichtung berechnet und zur Steuerung derselben verwendet. Das Packstück wird bzw. die Packstücke werden mittels der Handhabungseinheit ergriffen und über die Packstücksammelvorrichtung auf das Transportabführmittle bzw. den Teleskopbandförderer gefördert. Dabei können handelsübliche Mehrachsroboter /-systeme und Steuerungen eingesetzt werden.

Die Packstücksammelvorrichtung nach der Erfindung unterscheidet sich von bekannten Lösungen insbesondere dadurch, dass sie eine rein mechanische Lösung ist und keine Steuerung besitzt, die für die Entladung benötigt wird. Die Packstücksammelvorrichtung bietet vorzugsweise zwei manuelle Arbeitsplätze, die im Sinne der Wandlungsfähigkeit Raum zum Beispiel für einen Einsatz weiterer automatisierter Lösungen bietet, zum Beispiel in Form eines Roboters.

### Kurze Beschreibung der Zeichnungen

Nachfolgend wird die Erfindung unter Bezugnahme auf die anliegenden Zeichnungen anhand bevorzugter Ausführungsbeispiele näher erläutert.

In den Zeichnungen zeigen
- Fig. 1: eine schematische Aufsicht eines Ausführungsbeispiels der Erfindung,
- Fig. 2a - 2c: ein Detail eines Seitenelements in eines Ausführungsbeispiels der Erfindung in drei unterschiedlichen Blickrichtungen,
- Fig. 3: eine schematische Aufsicht eines weiteren Ausführungsbeispiels der Erfindung mit in einer Arbeitsposition befindlichem Seitenelement,
- Fig. 4: eine schematische Aufsicht des Ausführungsbeispiels der Fig. 3 mit in einer Ruheposition befindlichem Seitenelement und
- Fig. 5: eine schematische Aufsicht eines weiteren Ausführungsbeispiels der Erfindung mit einem in einer Arbeitsposition befindlichem ersten Seitenelement und einem in einer Ruheposition befindlichem zweiten Seitenelement.

### Detaillierte Beschreibung der Ausführungsbespiele

Die beschriebenen Ausführungsbespiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

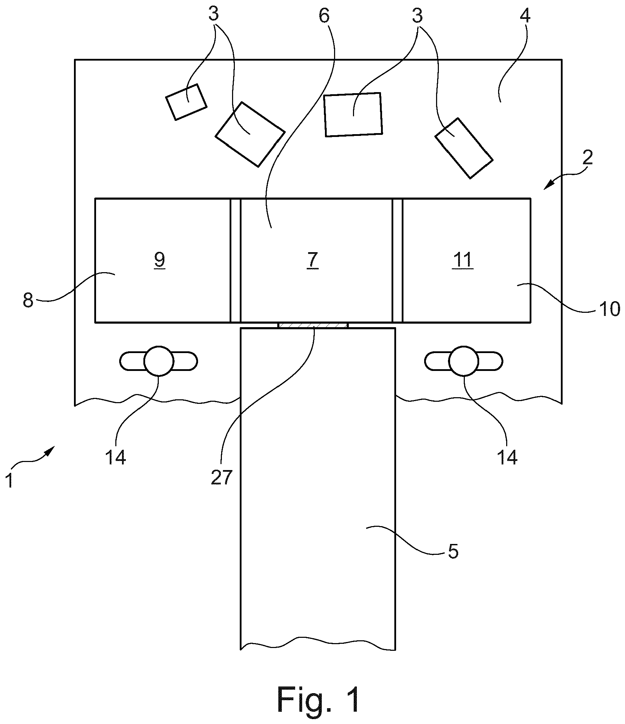

Fig. 1 zeigt eine Packstückhandhabungsanlage 1 umfassend eine Packstücksammelvorrichtung 2 nach der Erfindung. Die Packstücksammelvorrichtung 2 dient einem Entladen einer Mehrzahl an Packstücken 3 von einem Transportzuführmittel 4 der Packstückhandhabungsanlage 1 und einem Verbringen von entladenen Packstücken 3 zu einem Transportabführmittel 5 der Packstückhandhabungsanlage 1. Das Transportzuführmittel 4 ist in den vorliegenden Ausführungsbeispielen als Wechselbehälter 4 ausgebildet, während das Transportabführmittel 5 in den vorliegenden Ausführungsbeispielen als Teleskopbandförderer 5 ausgebildet ist.

Die Packstücksammelvorrichtung 2 umfasst ein Sammelelement 6, das eine Auflagefläche 7 für ein Packstück 3 während der Verbringung vom Transportzuführmittel 4 zum Transportabführmittel 5 aufweist. Sie umfasst außerdem ein erstes daran angeordnetes Seitenelement 8 mit einer weiteren Auflagefläche 9 für ein Packstück 3 sowie ein zweites daran angeordnetes Seitenelement 10 mit einer weiteren Auflagefläche 11. Das Seitenelement 8 und das Seitenelement 10 sind jeweils zwischen einer Ruheposition und einer Arbeitsposition verbringbar. Die Auflageflächen 9 bzw. 11 der jeweiligen Seitenelemente 8 bzw. 10 schließen bei in der Arbeitsposition befindlichem Seitenelement 8, 10 bündig an die Auflagefläche 7 des Sammelelements 6 an.

Die Packstücksammelvorrichtung 2 umfasst außerdem eine Koppeleinrichtung 27 zur mechanischen lösbaren Kopplung mit dem Transportabführmittel 5. Die Koppeleinrichtung 27 ist zum Anheben und Absenken der Packstücksammelvorrichtung 2 relativ zum Wechselbehälter 4 in einer vertikalen Richtung (das heißt in einer Richtung quer zur Zeichnungsebene der Fig. 1) eingerichtet. Dies kann nach der Erfindung erfolgen, indem entweder die Koppeleinrichtung 27 selbst das Anheben und Absenken der Packstücksammelvorrichtung 2 bewirkt oder die Koppelrichtung 27 ausgebildet ist, um ein durch eine separate (nicht in den Figuren gezeigte) Betätigungseinrichtung bewirktes Angeben und Absenken auf die Packstücksammelvorrichtung 2 zu übertragen. Außerdem ist die Koppeleinrichtung 27 zum Positionieren der Packstücksammelvorrichtung 2 in einer im Wesentlichen horizontalen Richtung ausgebildet (das heißt in Richtung der Zeichnungsebene der Fig. 1). Mittels der Koppeleinrichtung 27 ist Packstücksammelvorrichtung 2 relativ zum Teleskopbandförderer 5 in horizontaler wie auch in vertikaler Richtung positionierbar. Auf diese Weise kann die Tiefe des Wechselbehälters 4 voll ausgenutzt werden.

Die Koppelvorrichtung 27 ist außerdem mit einer (in den Figuren nicht dargestellten) in horizontaler Richtung wirkenden Überlasteinrichtung versehen, die unterhalb einer einstellbaren Grenzlast eine feste Kopplung der Packstücksammelvorrichtung 2 mit dem Teleskopbandförderer 5 bewirkt und bei Erreichen und Überschreiten der Grenzlast ein automatisches Entkoppeln der Packstücksammelvorrichtung 2 von dem Teleskopbandförderer 5 bewirkt.

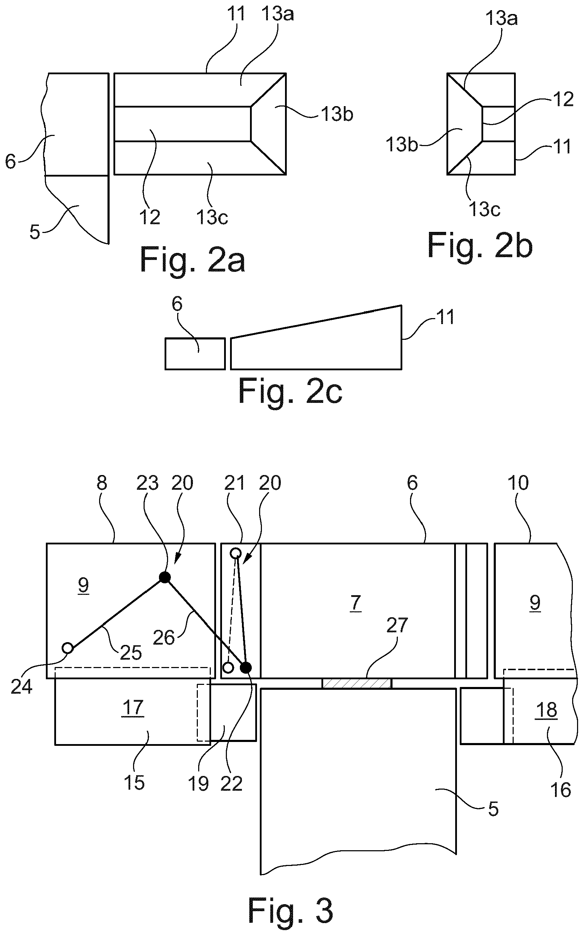

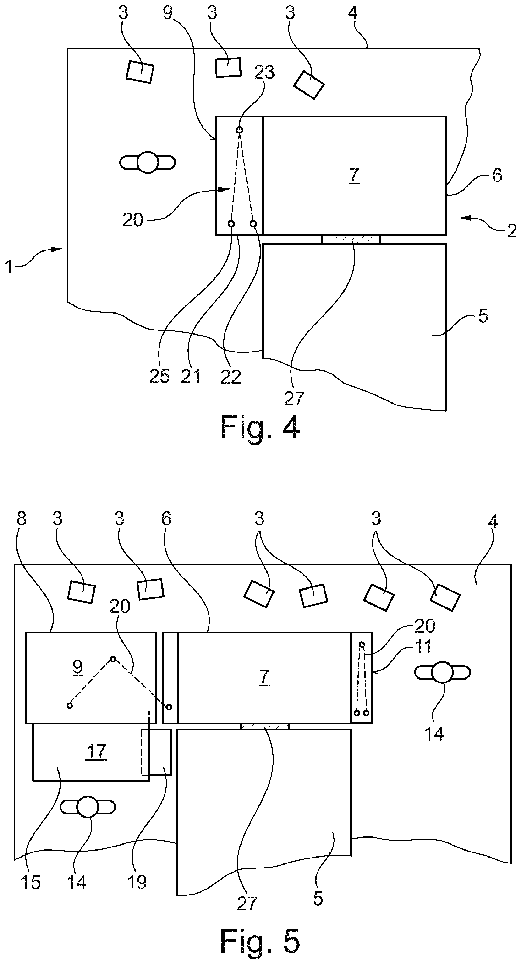

Bei dem weiteren Ausführungsbeispiel der Figuren 2a, 2b und 2c ist die Auflagefläche 9, 11 des Seitenelements 8, 10 in der Arbeitsposition in einer zum Sammelelement 6 weisenden Richtung geneigt, derart, dass die entsprechende Auflagefläche 9, 11 zum Sammelelement 6 hin abfällt. Außerdem ist die Auflagefläche 9, 11 des Seitenelements 8, 10 in Teilbereichen in einer Richtung quer zum Sammelelement 6 geneigt, nämlich indem sie trichterförmig mit einem Mittelabschnitt 12 und zum Mittelabschnitt 12 geneigten Randabschnitten 13a, 13b und 13c ausgebildet ist. Damit ist das Seitenelement 8, 10 derart ausgebildet, dass die Packstücke 3 zunächst in Richtung einer Bedienperson 14 gleiten, die sich auf der dem Wechselbehälter 4 gegenüberliegenden Seite des entsprechenden Seitenelements 8, 10 befindet (siehe zum Beispiel Fig. 1 oder Fig. 5). Die Auflagefläche 9, 11 des Seitenelements 8, 10 ist derart mit einer Art Senke ausgebildet, in die ein Packstück 3 hineingleitet (über den Randabschnitt 13a), ggf. auf den gegenüberliegenden Seite dann wieder hinaufgleiten (über den gegenüberliegenden Randabschnitt 13c) und schließlich im Bereich der Senke im Wesentlichen lagebestimmt verbleibt (auf dem Mittelabschnitt 12).

Wie in den Figuren 3, 4 und 5 dargestellt ist, ist das Seitenelement 8 und/oder das Seitenelement 10 mit einer Ausziehvorrichtung 15 bzw. 16 versehen. Mittels einer solchen Ausziehvorrichtung 15, 16 ist die Auflagefläche 9, 11 des Seitenelements 8, 10 in vorteilhafter Weise vergrößerbar. Die Ausziehvorrichtung 15, 16 ist im dargestellten Ausführungsbeispiel ein gegenüber der Auflagefläche 9, 11 des Seitenelements 8, 10 relativpositionierbares Schubelement 15, 16 und ist auf der Seite der Bedienperson 14 des Seitenelements angeordnet. Das Schubelement 15, 16 bildet im ausgezogenen Zustand mit der jeweiligen Auflagefläche 9, 11 des jeweiligen Seitenelements 8, 10 eine bündige und ebene Auflagefläche 17, 18 aus. Diese sind jeweils derart ausgebildet, dass sie durch den Druck großer Packstücke ausfahren und automatisch die Auflagefläche 9, 11 erweitern. In erster Näherung kann die Tiefe d der Auflagefläche 9, 11 des Seitenelements 8, 10 von beispielsweise etwa 40cm auf etwa 60 cm vergrößert werden.

Auch weist das Seitenelement 8, 10 ein gegenüber dem Schubelement 15, 16 relativpositionierbares Schwenkelement 19 auf. Diese bildet im ausgeschwenkten Zustand (dargestellt in den Figuren 3 und 5) zusammen mit dem jeweiligen Schubelement 15, 16 und der Auflagefläche 9, 11 des jeweiligen Seitenelements 8, 10 eine im Wesentlichen bündige und/oder ebene Fläche aus. Das Schwenkelement 19 dient dazu, eine zwischen dem Schubelement 15, 16 und dem Teleskopbandförderer 5 befindliche Lücke bei Bedarf zu schließen. Das Schwenkelement 19 schwenkt in den dargestellten Ausführungsbeispielen automatisch ein- und aus.

Eine Stabilisierung des Seitenelements 8, 10 gegenüber dem Sammelelement 6 erfolgt über eine unterhalb der Auflagefläche 9, 11 angeordnete Stütze 20 in Form einer Klappstütze 20. Diese ist einerseits am Sammelelement 6 und anderseits am jeweiligen Seitenelement 8, 10 angeordnet. Sie richtet bei in der Arbeitsposition (siehe Fig. 3 sowie Fig. 5 links) befindlichem Seitenelement 8, 10 dessen Auflagefläche 9, 11 bestimmungsgemäß aus und fixiert diese. Bei in der Ruheposition (siehe Fig. 4 sowie Fig. 5 rechts) befindlichem Seitenelement 8, 10 ist die Klappstütze 20 in einer Einhausung 21, die unterhalb der jeweiligen Auflagefläche 7 des Sammelelements 6 aufgenommen. Derart besitzt die Vorrichtung 2 in vorteilhafter Weise nur einen geringen Raumbedarf. Die Klappstütze 20 besitzt drei Standbeine 22, 23, 24, die mittels Verbindungsstäben 25, 26 miteinander verbunden sind. Bei eingeklapptem Seitenelement 8, 10 befinden sich sowohl die Standbeine 22, 23, 24 als auch die Verbindungstäbe 25, 26 der Klappstütze 20 innerhalb der Einhausung 21. Die Auflagefläche 9, 10 verschließt bei eingeklappten Seitenelement 8, 10 die Einhausung 21.

Fig. 5 zeigt die erfindungsgemäße Vorrichtung 2 bzw. Anlage 1 in einem Betriebszustand, in dem auf der linken Seite ein Pulk von Packstücken 3 noch die Höhe des Seitenelements 8 überragt, wobei der Pulk der Packstücke 3 im Wechselbehälter 4 auf der rechten Seite jedoch bereits bis zu Höhe des Seitenelements 10 abgetragen ist. In diesem Zustand ist das Seitenelement 11 bei der weiteren Verbringung von Packstücken 3 aus dem Wechselbehälter 4 auf den Teleskopbandförderer 5 hinderlich, weshalb die Auszieheinrichtung 16 einschoben wurde. Danach wurde das Seitenelement 10 in die dargestellte Ruheposition verbracht, indem seine Auflagefläche 11 angehoben, die Klappstütze 20 eingeklappt und die Auflagefläche 11 nach unten geklappt wurden. Derart ist der Weg für die Bedienperson 14 frei, um verbleibende Packstücke 3 auf das zentrale Sammelelement 6 und/oder auf den Teleskopbandförderer 5 zu legen.

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**Bezugszeichenliste**

| | |
|---|---|
| Packstückhandhabungsanlage | 1 |
| Packstücksammelvorrichtung | 2 |
| Packstück, Packstücke | 3 |
| Transportzuführmittel, Wechselbehälter | 4 |
| Transportabführmittel, Teleskopbandförderer | 5 |
| Sammelelement | 6 |
| Auflagefläche | 7 |
| Seitenelement | 8 |
| Auflagefläche | 9 |
| Seitenelement | 10 |
| Auflagefläche | 11 |
| Mittelabschnitt | 12 |
| Randabschnitt | 13a, 13b, 13c |
| Bedienperson | 14 |
| Ausziehvorrichtung, Schubelement | 15 |
| Ausziehvorrichtung, Schubelement | 16 |
| Auflagefläche | 17 |
| Auflagefläche | 18 |
| Schwenkelement | 19 |
| Stütze, Klappstütze | 20 |
| Einhausung | 21 |
| Standbein | 22 |
| Standbein | 23 |
| Standbein | 24 |
| Verbindungsstab | 25 |
| Verbindungsstab | 26 |
| Koppelelement | 27 |

## Patentansprüche

1. Packstücksammelvorrichtung (2) für eine Packstückhandhabungsanlage (1) zum Entladen einer Mehrzahl an Packstücken (3) von einem Transportzuführmittel (4) der Packstückhandhabungsanlage (1) und Verbringen von entladenen Packstücken (3) zu einem Transportabführmittel (5) der Packstückhandhabungsanlage (1), wobei
die Packstücksammelvorrichtung (2) ein Sammelelement (6), das eine Auflagefläche (7) für wenigstens ein Packstück (3) während der Verbringung vom Transportzuführmittel (4) zum Transportabführmittel (5) aufweist, und zumindest ein daran angeordnetes zwischen einer Ruheposition und einer Arbeitsposition verbringbares Seitenelement (8, 10) mit einer weiteren Auflagefläche (9, 11) für wenigstens ein Packstück (3) umfasst,
und die Auflagefläche (9, 11) des Seitenelements (8, 10) bei in der Arbeitsposition befindlichem Seitenelement (8, 10) bündig an die Auflagefläche (7) des Sammelelements (6) anschließt,
**dadurch gekennzeichnet, dass** die Packstücksammelvorrichtung (2) außerdem eine Koppeleinrichtung (27) zur mechanischen lösbaren Kopplung mit dem Transportabführmittel (5) umfasst, und
wobei die Koppeleinrichtung (27) zum Positionieren der Packstücksammelvorrichtung (2) in einer im Wesentlichen horizontalen Richtung ausgebildet ist und mit einer in horizontaler Richtung wirkenden Überlasteinrichtung versehen ist, die unterhalb einer vorzugsweise einstellbaren Grenzlast eine feste Kopplung der Packstücksammelvorrichtung (2) mit dem Transportabführmittel (5) bewirkt und bei Erreichen der Grenzlast in horizontaler Richtung ein automatisches Entkoppeln der Packstücksammelvorrichtung (2) von dem Transportabführmittel (5) bewirkt.

2. Packstücksammelvorrichtung (2) nach dem vorhergehenden Anspruch, umfassend zwei zwischen einer Ruheposition und einer Arbeitsposition verbringbare Seitenelemente (8, 10), die auf einander gegenüberliegenden Seiten des Sammelelements (6) angeordnet sind.

3. Packstücksammelvorrichtung (2) nach einem der vorhergehenden Ansprüche, wobei die Koppeleinrichtung (27) zum Anheben und Absenken der Packstücksammelvorrichtung (2) eingerichtet ist.

4. Packstücksammelvorrichtung (2) nach dem vorhergehenden Anspruch, wobei die Koppeleinrichtung (27) als Rutschkupplung (27) ausgebildet ist.

5. Packstücksammelvorrichtung (2) nach einem der vorhergehenden Ansprüche, wobei die Auflagefläche (9, 11) des Seitenelements (8, 10) bei in der Arbeitsposition befindlichem Seitenelement (8, 10) in einer zum Sammelelement (6) weisenden Richtung geneigt ist.

6. Packstücksammelvorrichtung (2) nach einem der vorhergehenden Ansprüche, wobei die Auflagefläche (9, 11) des Seitenelements (8, 10) in einer Richtung quer zum Sammelelement (6) geneigt ist, insbesondere trichterförmig ausgebildet ist.

7. Packstücksammelvorrichtung (2) nach einem der vorhergehenden Ansprüche, wobei das Seitenelement (8, 10) mit einer Ausziehvorrichtung (15, 16) versehen ist, mittels der die Auflagefläche (9, 11) des Seitenelements (8, 10) vergrößerbar ist, wobei die Ausziehvorrichtung (15, 16) vorzugsweise ein gegenüber der Auflagefläche (9, 11) des Seitenelements (8, 10) relativpositionierbares Schubelement (15, 16) umfasst, das eine im ausgezogenen Zustand mit der Auflagefläche (9, 11) des Seitenelements (8, 10) im Wesentlichen bündige und/oder ebene Fläche ausbildet.

8. Packstücksammelvorrichtung (2) nach dem vorhergehenden Anspruch, außerdem aufweisend ein gegenüber dem Schubelement (15, 16) relativpositionierbares Schwenkelement (19), das im ausgeschwenkten Zustand zusammen mit dem Schubelement (15, 16) und der Auflagefläche (9, 11) des Seitenelements (8, 10) eine im Wesentlichen bündige und/oder ebene Fläche ausbildet.

9. Packstücksammelvorrichtung (2) nach einem der vorhergehenden Ansprüche, außerdem umfassend eine Klappstütze, die einerseits am Sammelelement angeordnet ist und bei in der Arbeitsposition befindlichem Seitenelement (8, 10) dessen Auflagefläche (9, 11) bestimmungsgemäß ausrichtet und/oder fixiert und vorzugsweise bei in der Ruheposition befindlichem Seitenelement (8, 10) in einer Einhausung unterhalb der Auflagefläche (7) des Sammelelements (6) aufgenommen ist.

10. Packstückhandhabungsanlage (1) umfassend ein Transportabführmittel (5), vorzugsweise in Form eines Teleskopbandförderers (5), und eine Packstücksammelvorrichtung (2) nach einem der vorhergehenden Ansprüche.

11. Packstückhandhabungsanlage (1) nach dem vorhergehenden Anspruch, wobei die Packstücksammelvorrichtung (2) mittels der Koppeleinrichtung (27) mit dem Transportabführmittel (5) lösbar gekoppelt ist.

12. Packstückhandhabungsanlage (1) nach dem vorhergehenden Anspruch, umfassend ein Transportzuführmittel (4), wobei die Packstücksammelvorrichtung (2) mittels des Transportabführmittels (5) zum Transportzuführmittel (4) relativpositionierbar ist, insbesondere in vertikaler und/oder horizontaler Richtung.

## Claims

1. Package-collecting apparatus (2) for a package-handling installation (1) for unloading a plurality of packages (3) from a transport supply means (4) of the package-handling installation (1) and for transferring unloaded packages (3) to a transport discharge means (5) of the package-handling installation (1), wherein
the package-collecting apparatus (2) comprises a collecting element (6), which has a bearing surface (7) for at least one package (3) during the transfer from the transport supply means (4) to the transport discharge means (5), and at least one side element (8, 10) arranged thereon, which is transferable between a rest position and a working position and has a further bearing surface (9, 11) for at least one package (3),
and, with the side element (8, 10) in the working position, the bearing surface (9, 11) of the side element (8, 10) flushly adjoins the bearing surface (7) of the collecting element (6),
**characterized in that** the package-collecting apparatus (2) moreover comprises a coupling device (27) for mechanical releasable coupling to the transport discharge means (5), and
wherein the coupling device (27) is designed for positioning the package-collecting apparatus (2) in a substantially horizontal direction and is provided with an overload device which acts in a horizontal direction and which, below a preferably settable limit load, brings about fixed coupling of the package-collecting apparatus (2) to the transport discharge means (5) and, upon attainment of the limit load, in a horizontal direction, brings about automatic decoupling of the package-collecting apparatus (2) from the transport discharge means (5).

2. Package-collecting apparatus (2) according to the preceding claim, comprising two side elements (8, 10) which are transferable between a rest position and a working position and which are arranged on mutually opposite sides of the collecting element (6).

3. Package-collecting apparatus (2) according to either of the preceding claims, wherein the coupling device (27) is configured for raising and lowering of the package-collecting apparatus (2).

4. Package-collecting apparatus (2) according to the preceding claim, wherein the coupling device (27) is in the form of a slip coupling (27).

5. Package-collecting apparatus (2) according to one of the preceding claims, wherein, with the side element (8, 10) in the working position, the bearing surface (9, 11) of the side element (8, 10) is inclined in a direction pointing towards the collecting element (6).

6. Package-collecting apparatus (2) according to one of the preceding claims, wherein the bearing surface (9, 11) of the side element (8, 10) is inclined in a direction transverse to the collecting element (6), in particular is of funnel-shaped form.

7. Package-collecting apparatus (2) according to one of the preceding claims, wherein the side element (8, 10) is provided with a pull-out apparatus (15, 16) by means of which the bearing surface (9, 11) of the side element (8, 10) is able to be enlarged, wherein the pull-out apparatus (15, 16) preferably comprises a push element (15, 16) which is relatively positionable with respect to the bearing surface (9, 11) of the side element (8, 10) and which forms a surface which, in the pulled-out state, is, with respect to the bearing surface (9, 11) of the side element (8, 10), substantially flush and/or planar.

8. Package-collecting apparatus (2) according to the preceding claim, moreover having a pivoting element (19) which is relatively positionable with respect to the push element (15, 16) and which, in the pivoted-out state, forms a substantially flush and/or planar surface together with the push element (15, 16) and the bearing surface (9, 11) of the side element (8, 10).

9. Package-collecting apparatus (2) according to one of the preceding claims, moreover comprising a folding support which is arranged on the collecting element at one side and, with the side element (8, 10) in the working position, orients and/or fixes the bearing surface (9, 11) thereof as intended and preferably, with the side element (8, 10) in the rest position, is accommodated in a housing below the bearing surface (7) of the collecting element (6).

10. Package-handling installation (1) comprising a transport discharge means (5), preferably in the form of a telescopic belt conveyor (5), and a package-collecting apparatus (2) according to one of the preceding claims.

11. Package-handling installation (1) according to the preceding claim, wherein the package-collecting apparatus (2) is releasably coupled to the transport discharge means (5) by means of the coupling device (27).

12. Package-handling installation (1) according to the preceding claim, comprising a transport supply means (4), wherein, by means of the transport discharge means (5), the package-collecting apparatus (2) is relatively positionable, in particular in a vertical and/or horizontal direction, with respect to the transport supply means (4).

## Revendications

1. Dispositif de collecte de colis (2) pour une installation de manutention de colis (1) servant à décharger une pluralité de colis (3) d'un moyen d'alimentation de transport (4) de l'installation de manutention de colis (1) et à transférer des colis (3) déchargés sur un moyen d'évacuation de transport (5) de l'installation de manutention de colis (1), dans lequel
le dispositif de collecte de colis (2) comprend un élément collecteur (6) qui présente une surface de support (7) pour au moins un colis (3) pendant le transfert du moyen d'alimentation de transport (4) au moyen d'évacuation de transport (5), et au moins un élément latéral (8, 10) disposé au niveau de celui-ci, pouvant être transféré entre une position de repos et une position de travail et pourvu d'une autre surface de support (9, 11) pour au moins un colis (3),
et la surface de support (9, 11) de l'élément latéral (8, 10) est adjacente au même niveau à la surface de support (7) de l'élément collecteur (6) lorsque l'élément latéral (8, 10) se trouve dans la position de travail,
**caractérisé en ce que** le dispositif de collecte de colis (2) comprend en outre un dispositif de couplage (27) pour le couplage mécanique amovible au moyen d'évacuation de transport (5), et
dans lequel le dispositif de couplage (27) est réalisé pour positionner le dispositif de collecte de colis (2) dans une direction substantiellement horizontale et est muni d'un dispositif de surcharge agissant dans une direction horizontale qui provoque au-dessous d'une charge limite de préférence réglable un couplage fixe du dispositif de collecte de colis (2) au moyen d'évacuation de transport (5), et lorsque la charge limite est atteinte, provoque dans la direction horizontale un découplage automatique du dispositif de collecte de colis (2) du moyen d'évacuation de transport (5).

2. Dispositif de collecte de colis (2) selon la revendication précédente, comprenant deux éléments latéraux (8, 10) pouvant être transférés entre une position de repos et une position de travail et qui sont disposés sur des faces opposées de l'élément collecteur (6).

3. Dispositif de collecte de colis (2) selon l'une quelconque des revendications précédentes, dans lequel le dispositif de couplage (27) est conçu pour soulever et abaisser le dispositif de collecte de colis (2).

4. Dispositif de collecte de colis (2) selon la revendication précédente, dans lequel le dispositif de couplage (27) est réalisé sous la forme d'un accouplement à friction (27).

5. Dispositif de collecte de colis (2) selon l'une quelconque des revendications précédentes, dans lequel la surface de support (9, 11) de l'élément latéral (8, 10) est inclinée dans une direction orientée vers l'élément collecteur (6) lorsque l'élément latéral (8, 10) se trouve dans la position de travail.

6. Dispositif de collecte de colis (2) selon l'une quelconque des revendications précédentes, dans lequel la surface de support (9, 11) de l'élément latéral (8, 10) est inclinée dans une direction transversale à l'élément collecteur (6), en particulier réalisée en forme d'entonnoir.

7. Dispositif de collecte de colis (2) selon l'une quelconque des revendications précédentes, dans lequel l'élément latéral (8, 10) est muni d'un dispositif d'extraction (15, 16) à l'aide duquel la surface de support (9, 11) de l'élément latéral (8, 10) peut être agrandie, le dispositif d'extraction (15, 16) comprenant de préférence un élément de poussée (15, 16) pouvant être positionné de manière relative par rapport à la surface de support (9, 11) de l'élément latéral (8, 10) et qui réalise à l'état déployé une surface substantiellement affleurée et/ou plane avec la surface de support (9, 11) de l'élément latéral (8, 10).

8. Dispositif de collecte de colis (2) selon la revendication précédente, présentant en outre un élément pivotant (19) pouvant être positionné de manière relative par rapport à l'élément de poussée (15, 16) et qui réalise à l'état pivoté une surface substantiellement affleurée et/ou plane conjointement avec l'élément de poussée (15, 16) et la surface de support (9, 11) de l'élément latéral (8, 10).

9. Dispositif de collecte de colis (2) selon l'une quelconque des revendications précédentes, comprenant en outre une béquille qui est disposée d'une part au niveau de l'élément collecteur, et lorsque l'élément latéral (8, 10) se trouve dans la position de travail, aligne et/ou fixe correctement la surface de support (9, 11) de celui-ci, et lorsque l'élément latéral (8, 10) se trouve dans la position de repos, est de préférence reçue dans un logement sous la surface de support (7) de l'élément collecteur (6).

10. Installation de manutention de colis (1), comprenant un moyen d'évacuation de transport (5), de préférence sous la forme d'un convoyeur à bande télescopique (5), et un dispositif de collecte de colis (2) selon l'une quelconque des revendications précédentes.

11. Installation de manutention de colis (1) selon la revendication précédente, dans laquelle le dispositif de collecte de colis (2) est couplé de manière amovible au moyen d'évacuation de transport à l'aide du dispositif de couplage (27).

12. Installation de manutention de colis (1) selon la revendication précédente, comprenant un moyen d'alimentation de transport (4), dans lequel le dispositif de collecte de colis (2) peut être positionné de manière relative par rapport au moyen d'alimentation de transport (4) à l'aide du moyen d'évacuation de transport (5), en particulier dans la direction verticale et/ou horizontale.
